# EUROPEAN PATENT SPECIFICATION

(11) **EP 1 090 789 B1**
(45) Date of publication and mention of the grant of the patent: **14.03.2007**
(21) Application number: 00830613.6
(22) Date of filing: 11.09.2000
(51) Int. Cl.: B60J 7/06, B60J 5/06

(54) **Guide for movable coverings and movable covering comprising said guide**
Führung für eine bewegliche Abdeckung und bewegliche Abdeckung unter Verwendung einer solchen Führung
Dispositif de guidage pour une couverture mobile et couverture mobile comprenant un tel dispositif de guidage

(30) Priority: 04.10.1999 IT MI992065
(43) Date of publication of application: 11.04.2001
(73) Proprietor: Dona', Severino, 20090 Caleppio di Settala, Milano (IT)
(72) Inventor: Dona', Severino, 20090 Caleppio di Settala, Milano (IT)
(74) Representative: Pizzoli, Antonio

(56) References cited:
- EP-A- 0 925 976
- WO-A-94/18030
- DE-U- 29 618 264
- GB-A- 2 071 582
- GB-A- 2 267 108
- US-A- 4 861 094
- US-A- 5 111 867

## Description

The present invention relates to a guide for movable coverings, and particularly to a guide for the crossbars of the movable coverings which can be fixed to the ground or onto transport means, such as trucks or trailer-trucks. The present invention also relates to a movable covering comprising said guide.

From EP-B-621151 and EP-A-925976 which document shows the features of the preamble of claim 1, both documents in the name of the same applicant are known two guides comprising a lower portion provided with two downwardly open rails, which act as a support for the carriages holding up the tarpaulin at the side of the movable covering and for the carriages of the uprights holding up the guides themselves, respectively, in order to avoid their downward bending. The upper portion of the guides is instead provided with one or more rails in which the carriages arranged at the ends of the crossbars supporting the tarpaulin forming the upper wall of the movable covering can run.

During the loading and unloading operations, in order to make the access through the side walls of the movable covering easier, each of said uprights is joined with the relevant carriage by means of an upper hinge and generally comprises a lower hinge, so as to be folded in two portions and then moved along said rails. However, this upper hinge disadvantageously reduces the rigidity of the upright, so as to weaken the entire structure which supports the guides. Furthermore, these kinds of known guides have the disadvantage of being quite wide.

It is therefore an object of the present invention to provide a guide and a movable covering, which are free from said drawbacks. Said object is achieved by a guide and a movable covering the main features of which are described in the first and the fifth claim, respectively, and other features are described in the remaining claims.

Thanks to the particular arrangement of the rail in which the wheels of the carriages of the uprights can run, not only the overall width of the guide according to the present invention is decreased, but also a base which can firmly rest onto the uprights themselves is obtained, so as to increase the solidity of the entire movable covering.

Furthermore, thanks to the particular shape of said rail, the wheels of the carriages can swing therein so as to allow the outwards rotation of the uprights, thereby avoiding the use of the upper hinge which would weaken the structure of the movable covering.

According to a particular embodiment of the present invention, the carriages of the uprights comprise a longitudinal groove having an inner profile complementary with the outer profile of the lower portion of the rail in which they run, as well as a longitudinal bar suitable for being arranged in a seat made in the upper portion of the rail itself. With this arrangement, the solidity of the coupling between guide and uprights is further increased, and also the wear of the wheels of the relevant carriages is avoided when the latter are not used.

Therefore, when the movable covering is closed, the uprights are firmly coupled with the guide as they were "bolted" thereto, while when the movable covering is open, the ends of the uprights can swing in the guide as they were "hinged" thereto.

Further advantages and features of the guide and the movable covering according to the present invention will be evident to those skilled in the art from the following detailed description of one embodiment thereof with reference to the accompanying drawings, wherein:
- figure 1 shows a partial cross-sectional view of a movable covering comprising a guide according to the present invention; and
- figure 2 shows a partial cross-sectional view of the movable covering of figure 1 during the lateral opening.

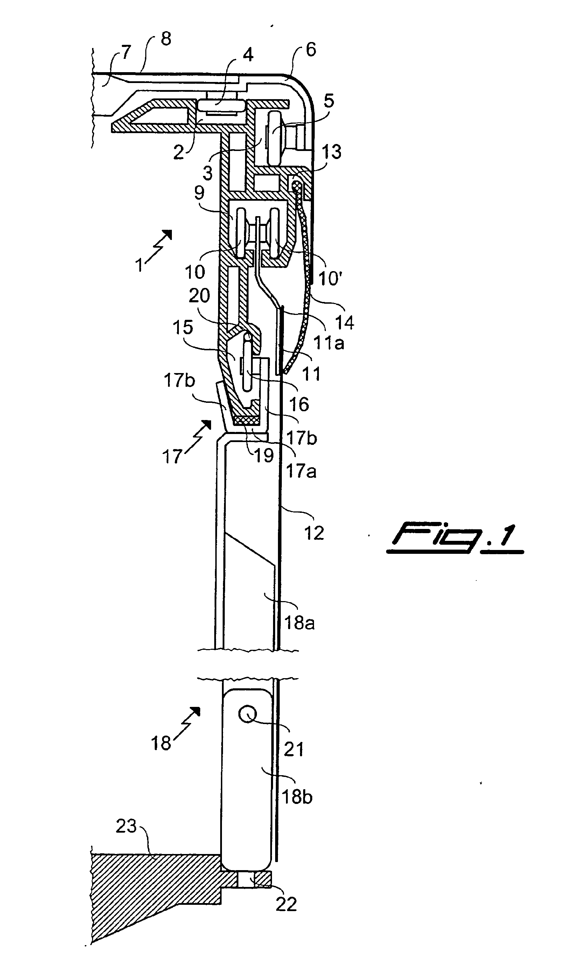

Referring to figure 1, a movable covering, for example for trailer trucks, is shown to comprise in a known way at least a guide 1 preferably formed of a single aluminum section suitably shaped, which is longitudinally arranged along both upper side edges of the covering itself. In turn, the upper portion of guide 1 comprises in a known way two grooves 2 and 3 acting as rails in which two pairs of wheels 4, 5 of a plurality of carriages 6 arranged at each end of some crossbars 7 supporting a tarpaulin 8 forming the upper wall of the movable covering can run. The lower portion of guide 1 comprises instead a double rail 9 having a substantially C-shaped and downwardly open inner profile. In the two lower grooves of rail 9 two pairs of aligned wheels 10, 10' of a plurality of carriages 11 supporting a tarpaulin 12 forming a side wall of the movable covering can run.

Also a longitudinal seat 13 is made outside guide 1 for housing an end of a pelmet 14 which protects the rails of the guide. Guide 1 finally comprises a longitudinal groove 15 acting as a rail in which a pair of aligned wheels 16 of one or more carriages 17 arranged at the upper end of each vertical beam 18 acting as a upright for holding up the guide itself can run.

Rail 15 is suitably arranged under rail 9 and has an inner profile which is substantially C-shaped and laterally open to the outside of the movable covering. Carriages 17 comprise a U-bent plate so as to form a longitudinal groove having an inner profile complementary to the outer profile of the lower portion of rail 15. With this arrangement, rail 15 can firmly rest onto the base 17a of carriages 17 and remains locked between the side walls 17b of the carriages themselves. For avoiding the wear of guide 1, a parallelepiped bar 19 of a plastic material acting as a protective lining is preferably arranged onto the base 17a of carriages 17. Carriages 17 are further provided with a cylindrical longitudinal bar 20 arranged between the two aligned wheels 16 so as to slightly protrude upwards with respect to the upper profile of the wheels themselves. The coupling between carriages 17 and guide 1 is therefore achieved, as well as through the base of carriages 17, also through the cylindrical longitudinal bars 20 which can be arranged in a corresponding seat having a complementary shape, in particular hemicylindrical, provided in the inner upper portion of rail 15.

Carriages 11 are essentially formed of a vertical plate bent along two parallel axes so as to have a central portion 11a inclined to the outside of the movable covering. The side tarpaulin 12 can thus be arranged in a perfectly vertical manner without contacting uprights 18. The latter are preferably divided into two portions 18a, 18b mutually hinged by means of a hinge 21, which is preferably arranged close to the lower end of the uprights themselves and can be temporarily locked by known fixing means, for instance screw fixing means. Such lower end of uprights 18 can be inserted into a longitudinal seat 22 formed of a groove arranged along an edge of the loading platform 23.

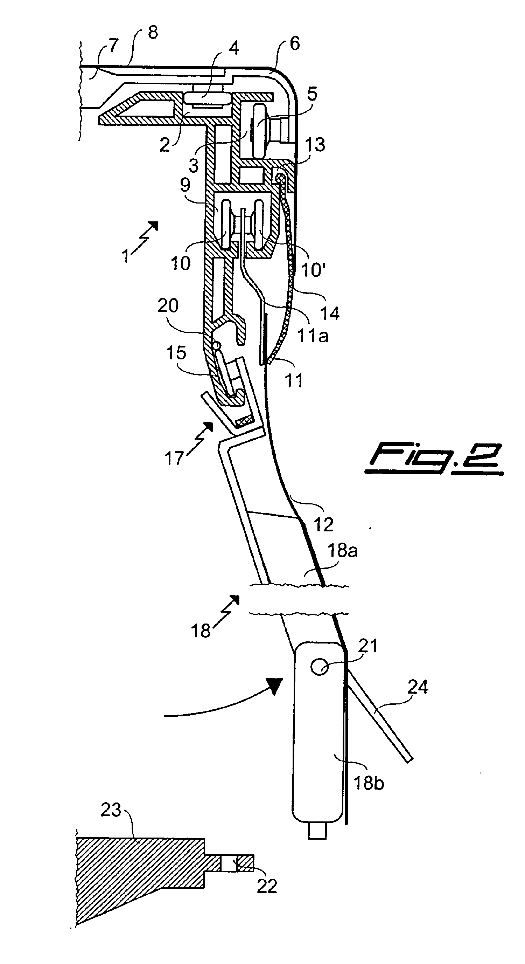

Referring now to figure 2, it is seen that for carrying out the loading and unloading operations in the mobile covering it is sufficient to move uprights 18 along guide 1 after hinge 21 has been unlocked and their upper portion 18a has been turned outwards in the direction indicated by the arrow. The unlocking of hinge 21 and the outwards rotation of the upper portion 18a of uprights 18 can be performed in a single operation by pulling outwards a lever 24 connected to such hinge. The lower portion 18b of uprights 18 can thus turn and come out of the longitudinal seat 22, while the pairs of wheel 16 move down and rest onto the lower portion of rail 15.

Therefore, carriages 17 of uprights 18 can be moved along guide 1 thanks to the pairs of wheels 16 which can run in the lower portion of rail 15, while the cylindrical bars 20 prevent the carriages from accidentally come out of the guide itself. Once the loading or unloading operations have ended, uprights 18 can be arranged in the initial position by carrying out the above described operative steps in an inverse manner.

## Claims

1. Guide (1) for movable coverings which comprises an upper and a lower portion, said upper portion being provided with one or more rails (2, 3) in which one or more wheels (4, 5) of at least one carriage (6) arranged at each end of a plurality of crossbars (7) suitable for supporting a first tarpaulin (8) forming the upper portion of the movable covering can run, and said lower portion being provided with a first rail (9) in which one or more wheels (10, 10') of at least one carriage (11) suitable for supporting a second tarpaulin (12) forming a side wall of the movable covering can run, as well as with a second rail (15) in which one or more wheels (16) of at least one carriage (17) arranged at one end of an upright (18) suitable for supporting the movable covering can run, **characterized in that** the second rail (15) of the lower portion of the guide (1) is arranged under the first rail (9) of the same portion and has a substantially C-shaped and laterally open inner profile.

2. Guide (1) according to the previous claim, **characterized in that** the second rail (15) of the lower portion of the guide (1) is laterally open to the outside of the movable covering.

3. Guide (1) according to any previous claim, **characterized in that** it comprises a longitudinal seat (13) suitable for housing an end of a pelmet (14) which protects the rails of the guide itself.

4. Guide (1) according to any previous claim, **characterized in that** it is formed of a single aluminum section shaped so as to obtain said rails (2, 3, 9, 15) of the upper portion and the lower portion.

5. Movable covering comprising at least one guide (1) according to any previous claim, **characterized in that** at least one carriage (17) suitable for running in the second rail (15) of the lower portion of the guide (1) comprises a U-bent plate so as to form a longitudinal groove having an inner profile substantially complementary to the outer profile of the lower portion of such second rail (15).

6. Movable covering according to the previous claim, **characterized in that** at least one carriage (17) suitable for running in the second rail (15) of the lower portion of the guide (1) comprises a pair of aligned wheels (16) suitable for running and laterally swinging inside such second rail (15).

7. Movable covering according to the previous claim, **characterized in that** between the pair of aligned wheels (16) a longitudinal bar (20) slightly protruding upwards with respect to the upper profile of such wheels (16) is arranged.

8. Movable covering according to the previous claim, **characterized in that** the upper inner portion of the second rail (15) of the guide (1) comprises a seat for said longitudinal bar (20).

9. Movable covering according to claim 5 to 8, **characterized in that** the base (17a) of at least one carriage (17) suitable for running in the second rail (15) of the guide (1) comprises a protective lining (19).

10. Movable covering according to claim 5 to 9, **characterized in that** at least one carriage (11) suitable for running in the first rail (9) of the lower portion of the guide (1) comprises a vertical plate bent along two parallel axes so as to have a central portion (11a) inclined to the outside of the movable covering.

11. Movable covering according to claim 5 to 10, **characterized in that** at least one upright (18) joined to a carriage (17) suitable for running in the second rail (15) of the lower portion of the guide (1) is divided into two portions (18a, 18b) mutually hinged by means of a hinge (21) which can be temporarily locked.

## Patentansprüche

1. Führung (1) für bewegliche Abdeckungen, die einen oberen und einen unteren Abschnitt umfasst, wobei der obere Abschnitt mit einer oder mehreren Schienen (2, 3) versehen ist, in denen ein oder mehrere Räder (4, 5) mindestens eines Schlittens (6) laufen können, der an jedem Ende einer Vielzahl von Querstangen (7) angeordnet ist, die sich dafür eignen, eine erste Plane (8) zu halten, die den oberen Abschnitt der beweglichen Abdeckung bildet, und wobei der untere Abschnitt mit einer ersten Schiene (9) versehen ist, in der ein oder mehrere Räder (10, 10') mindestens eines Schlittens (11) laufen können, der sich dafür eignet, eine zweite Plane (12) zu halten, die eine Seitenwand der beweglichen Abdeckung bildet, sowie mit einer zweiten Schiene (15), in der ein oder mehrere Räder (16) mindestens eines Schlittens (17) laufen können, der an einem Ende einer Runge (18) angeordnet ist, die sich dafür eignet, die bewegliche Abdeckung zu stützen,
**dadurch gekennzeichnet, dass** die zweite Schiene (15) des unteren Abschnitts der Führung (1) unter der ersten Schiene (9) desselben Abschnitts angeordnet ist und ein im Wesentlichen C-förmiges und zur Seite hin offenes inneres Profil aufweist.

2. Führung (1) nach dem vorhergehenden Anspruch, **dadurch gekennzeichnet, dass** sich die zweite Schiene (15) des unteren Abschnitts der Führung (1) seitlich zur Außenseite der beweglichen Abdeckung hin öffnet.

3. Führung (1) nach einem der vorhergehenden Ansprüche, **dadurch gekennzeichnet, dass** sie eine Aufnahme (13) in Längsrichtung aufweist, die sich dafür eignet, ein Ende einer Blende (14) aufzunehmen, die die Schienen der Führung selbst schützt.

4. Führung (1) nach einem der vorhergehenden Ansprüche, **dadurch gekennzeichnet, dass** sie aus einem einzelnen Aluminiumprofil besteht, das so geformt ist, dass die Schienen (2, 3, 9, 15) des oberen Abschnitts und des unteren Abschnitts erhalten werden.

5. Bewegliche Abdeckung, die mindestens eine Führung (1) nach einem der vorhergehenden Ansprüche umfasst, **dadurch gekennzeichnet, dass** mindestens ein Schlitten (17), der sich dafür eignet, in der zweiten Schiene (15) des unteren Abschnitts der Führung (1) zu laufen, eine U-förmig gebogene Platte umfasst, damit eine Längsnut mit einem inneren Profil entsteht, das im Wesentlichen das äußere Profil des unteren Abschnitts dieser zweiten Schiene (15) ergänzt.

6. Bewegliche Abdeckung nach dem vorhergehenden Anspruch, **dadurch gekennzeichnet, dass** mindestens ein Schlitten (17), der sich dafür eignet, in der zweiten Schiene (15) des unteren Abschnitts der Führung (1) zu laufen, ein Paar ausgerichteter Räder (16) aufweist, die sich dafür eignen, in dieser zweiten Schiene (15) zu laufen und zur Seite zu schwenken.

7. Bewegliche Abdeckung nach dem vorhergehenden Anspruch, **dadurch gekennzeichnet, dass** zwischen dem Paar ausgerichteter Räder (16) ein Längsstab (20) angeordnet ist, der in Bezug auf das obere Profil dieser Räder (16) etwas nach oben vorsteht.

8. Bewegliche Abdeckung nach dem vorhergehenden Anspruch, **dadurch gekennzeichnet, dass** der obere innere Abschnitt der zweiten Schiene (15) der Führung (1) eine Aufnahme für den Längsstab (20) umfasst.

9. Bewegliche Abdeckung nach Anspruch 5 bis 8, **dadurch gekennzeichnet, dass** das Unterteil (17a) mindestens eines Schlittens (17), der sich dafür eignet, in der zweiten Schiene (15) der Führung (1) zu laufen, eine schützende Auskleidung (19) umfasst.

10. Bewegliche Abdeckung nach Anspruch 5 bis 9, **dadurch gekennzeichnet, dass** mindestens ein Schlitten (11), der sich dafür eignet, in der ersten Schiene (9) des unteren Abschnitts der Führung (1) zu laufen, eine senkrechte Platte umfasst, die entlang zwei paralleler Achsen gebogen ist, sodass sie einen mittigen Abschnitt (11a) aufweist, der zur Außenseite der beweglichen Abdeckung hin gebogen ist.

11. Bewegliche Abdeckung nach Anspruch 5 bis 10, **dadurch gekennzeichnet, dass** mindestens eine Runge (18), die mit einem Schlitten (17) verbunden ist, der sich dafür eignet, in der zweiten Schiene (15) des unteren Abschnitts der Führung (1) zu laufen, in zwei Abschnitte (18a, 18b) unterteilt ist, die miteinander mit Hilfe eines Scharniers (21) gelenkig verbunden sind, das zeitweise festgestellt werden kann.

## Revendications

1. Guide (1) pour recouvrements mobiles qui comporte une partie supérieure et une partie inférieure, ladite partie supérieure étant munie d'un ou plusieurs rails (2, 3) dans lesquels peuvent se déplacer une ou plusieurs roues (4, 5) d'au moins un charriot (6) agencé à chaque extrémité d'une pluralité d'entretoises (7), approprié pour supporter une première bâche (8) formant la partie supérieure du recouvrement mobile, et ladite partie inférieure étant munie d'un premier rail (9), dans lequel peuvent se déplacer une ou plusieurs roues (10, 10') d'au moins un charriot (11) approprié pour supporter une seconde bâche (12) formant une paroi latérale du recouvrement mobile, ainsi que d'un second rail (15) dans lequel peuvent se déplacer une ou plusieurs roues (16) d'au moins un charriot (17) agencé à une première extrémité d'un montant (18) approprié pour supporter le recouvrement mobile, **caractérisé en ce que** le second rail (15) de la partie inférieure du guide (1) est agencé sous le premier rail (9) de la même partie, et a un profil intérieur sensiblement en forme de C et ouvert latéralement.

2. Guide (1) selon la revendication précédente, **caractérisé en ce que** le second rail (15) de la partie inférieure du guide (1) est ouvert latéralement vers l'extérieur du recouvrement mobile.

3. Guide (1) selon l'une quelconque des revendications précédentes, **caractérisé en ce qu'**il comporte un siège longitudinal (13) approprié pour recevoir une extrémité d'un bandeau (14) qui protège les rails du guide lui-même.

4. Guide (1) selon l'une quelconque des revendications précédentes, **caractérisé en ce qu'**il est formé d'un tronçon en aluminium unique mis en forme afin d'obtenir lesdits rails (2, 3, 9, 15) de la partie supérieure et de la partie inférieure.

5. Recouvrement mobile comportant au moins un guide (1) selon l'une quelconque des revendications précédentes, **caractérisé en ce qu'**au moins un charriot (17), approprié pour se déplacer dans le second rail (15) de la partie inférieure du guide (1), comporte une plaque incurvée en U afin de former une gorge longitudinale ayant un profil intérieur sensiblement complémentaire au profil extérieur de la partie inférieure d'un tel second rail (15).

6. Recouvrement mobile selon la revendication précédente, **caractérisé en ce qu'**au moins un charriot (17) approprié pour se déplacer dans le second rail (15) de la partie inférieure du guide (1) comporte une paire de roues alignées (16) appropriées pour se déplacer et osciller latéralement à l'intérieur d'un tel second rail (15).

7. Recouvrement mobile selon la revendication précédente, **caractérisé en ce qu'**entre la paire de roues alignées (16) est agencée une barre longitudinale (20) faisant légèrement saillie vers le haut par rapport au profil supérieur de telles roues (16).

8. Recouvrement mobile selon la revendication précédente, **caractérisé en ce que** la partie intérieure supérieure du second rail (15) du guide (1) comporte un siège pour ladite barre longitudinale (20).

9. Recouvrement mobile selon l'une quelconque des revendications 5 à 8, **caractérisé en ce que** la base (17a) d'au moins un charriot (17) approprié pour se déplacer dans le second rail (15) du guide (1) comporte une doublure de protection (19).

10. Recouvrement mobile selon l'une quelconque des revendications 5 à 9, **caractérisé en ce qu'**au moins un charriot (11) approprié pour se déplacer dans le premier rail (9) de la partie inférieure du guide (1) comporte une plaque verticale incurvée le long de deux axes parallèles, afin d'avoir une partie centrale (11a) inclinée vers l'extérieur du recouvrement mobile.

11. Recouvrement mobile selon l'une quelconque des revendications 5 à 10, **caractérisé en ce qu'**au moins un montant (18), relié à un charriot (17) approprié pour se déplacer dans le second rail (15) de la partie inférieure du guide (1), est divisé en deux parties (18a, 18b) mutuellement articulées par l'intermédiaire d'une articulation (21) qui peut être temporairement verrouillée.
